# DEMANDE DE BREVET EUROPEEN

(11) **EP 3 432 191 A1**
(43) Date de publication de la demande: **23.01.2019**
(21) Numéro de dépôt: 18182827.8
(22) Date de dépôt: 11.07.2018
(51) Int. Cl.: G06F 21/86, G08B 29/02, G06F 21/85, H04L 29/06

(54) **SYSTÈME DE SURVEILLANCE COMPORTANT UN POSTE CENTRAL ET UNE PLURALITÉ DE POSTES DE SURVEILLANCE, NOTAMMENT DE TECHNOLOGIE IP**

(30) Priorité: 17.07.2017 FR 1770764
(71) Demandeur: Amphitech, 75011 Paris (FR)
(72) Inventeur: LABOUILLE, Marc, 93220 Gagny (FR)
(74) Mandataire: Eidelsberg, Olivier Nathan

(57) **Abrégé**

Système de surveillance comporte au moins un poste central comportant au moins un serveur de commande et de traitement des données reçues du au moins un poste de surveillance, à distance du au moins un poste central, le au moins un poste central et le au moins un poste de surveillance étant reliés par un réseau de communication (1, 2, 3), notamment un réseau dit IP, pour la transmission de données entre le au moins un poste central et le ou les postes de surveillance, au moins un des postes de surveillance, de préférence chaque poste de surveillance, étant constitué d'un boîtier (4) pouvant être ouvert ou fermé, caractérisé en ce qu'il est prévu des moyens (5) de coupure de la communication réseau disposés entre le serveur et le boîtier pouvant être ouvert ou fermé.

## Description

La présente invention se rapporte à un système de surveillance comportant un poste central de surveillance, un serveur central de traitement des données et au moins un poste de surveillance, notamment une pluralité de postes de surveillance de technologie IP, par exemple une platine d'appel d'urgence, une borne d'appel, une caméra de surveillance, un interphone, un portier téléphonique ou analogue, par lequel une personne du public peut entrer en contact avec une personne se trouvant par exemple au poste central de surveillance.

De JP-A-2005 258600, il est connu un système de surveillance comportant au moins un poste central comportant au moins un serveur de commande et de traitement des données reçues d'un détecteur de fumée constitué d'un boîtier, à distance du au moins un poste central, le au moins un poste central et le détecteur de fumée étant reliés par un réseau de communication, pour la transmission de données entre eux.

De US 2002/007459 et de WO 96/29638, il est connu un système de surveillance suivant le préambule de la revendication 1.

La présente invention vise à mettre à disposition un système de surveillance plus sûr, et notamment moins susceptible d'être « piraté » par des tiers malveillants.

Suivant l'invention, un système de surveillance est tel que défini à la revendication 1. Des perfectionnements sont définis aux sous revendications.

De préférence, les moyens d'information envoient des données d'information relative à l'ouverture du boîtier d'un poste de surveillance par des moyens de communication indépendant du réseau aux moyens de coupure, et les moyens de coupure coupent le réseau de communication dès réception des données des moyens d'information.

Suivant un autre mode de réalisation, les moyens d'information envoient des données d'information relative à l'ouverture du boîtier d'un poste de surveillance aux moyens de coupure par l'intermédiaire du réseau.

Suivant un mode de réalisation préféré, les moyens de coupure sont disposés dans un boîtier de coupure ayant un port d'entrée recevant des communications du serveur, notamment d'un switch multipostes, et un port de sortie relié au boîtier du poste de surveillance, et les moyens de coupure coupent le réseau entre le port d'entrée et le port de sortie.

Suivant un mode de réalisation préféré, il est prévu une pluralité de postes de surveillance, et un switch multipostes est disposé entre chaque poste et le réseau, et les moyens de coupure de chaque poste sont reçus dans un boîtier de coupure commun.

De préférence, il est prévu un bouton d'armement/de réarmement du réseau sur le boîtier de coupure.

Suivant un mode de réalisation préféré, le boîtier de coupure est relié au serveur, de préférence par l'intermédiaire d'un switch, par un câble RJ 45 de données, et au boîtier constituant le poste de surveillance par un autre câble RJ 45, et les moyens de coupure coupent la liaison entre les deux câbles. Suivant un mode de réalisation, les moyens d'information comportent un bouton poussoir, un interrupteur, un commutateur ou analogue.

Suivant un mode de réalisation, les moyens d'information envoient une information dite à contact sec, notamment via un câble deux fils.

Aux figures à titre d'exemple, il est représenté des modes de réalisation de l'invention :
- La figure 1: représente de manière schématique une partie d'un réseau suivant un premier mode de réalisation de l'invention ;
- La figure 1A: représente de manière schématique une partie d'un réseau suivant un deuxième mode de réalisation de l'invention ;
- La figure 2: est un schéma synoptique décrivant le fonctionnement du système de la figure 1 ;

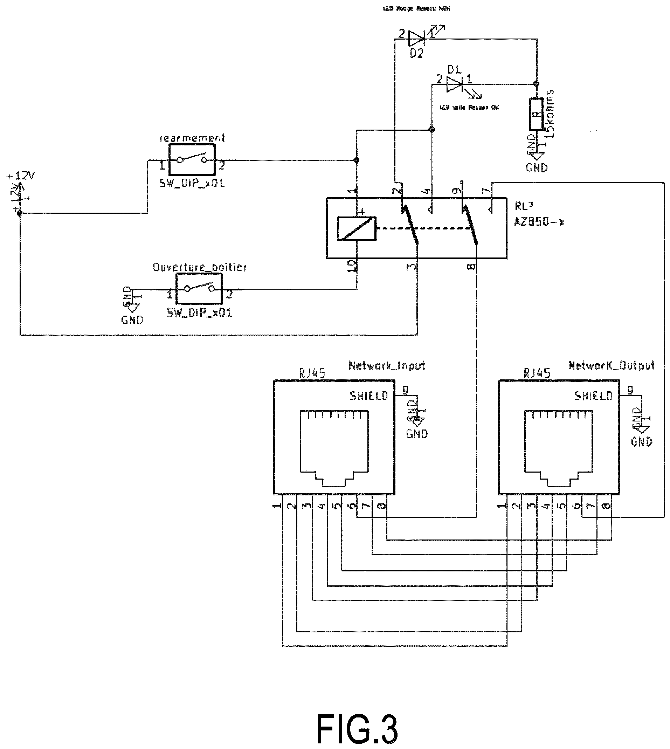

- La figure 3: est un schéma de circuit du boîtier de coupure du système représenté à la figure 1 ;
- La figure 4: est un schéma d'un autre mode de réalisation d'un système suivant l'invention, comportant un boîtier de coupure à quatre ports ;
- La figure 4A: est un schéma d'un autre mode de réalisation d'un système suivant l'invention, comportant un boîtier de coupure à quatre ports,

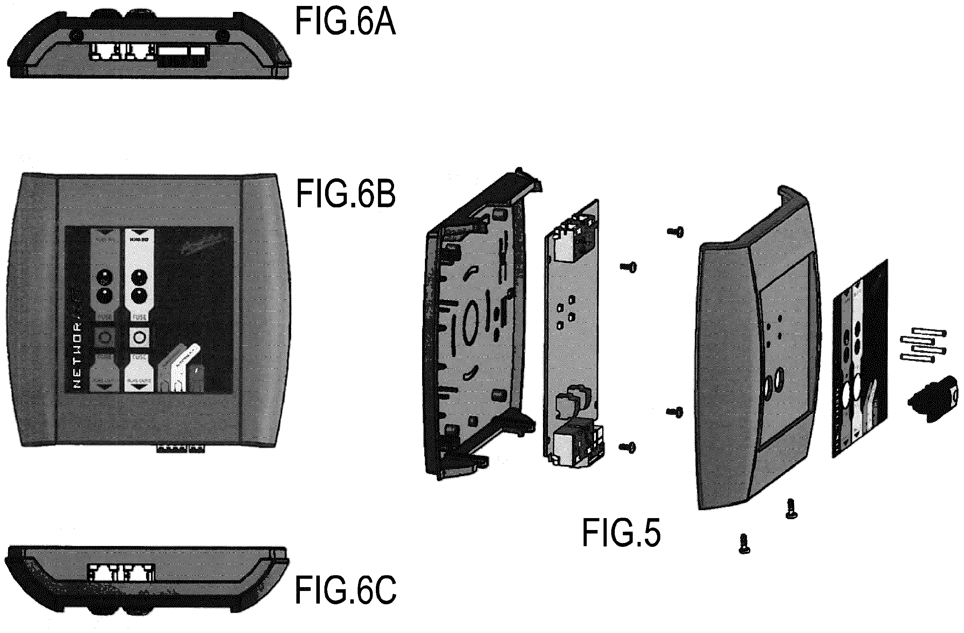

- La figure 5: est une vue en perspective éclatée du boîtier de coupure du système de la figure 1 ; et
- La figure 6: est une vue en perspective du boîtier de la figure 5 à l'état assemblé.

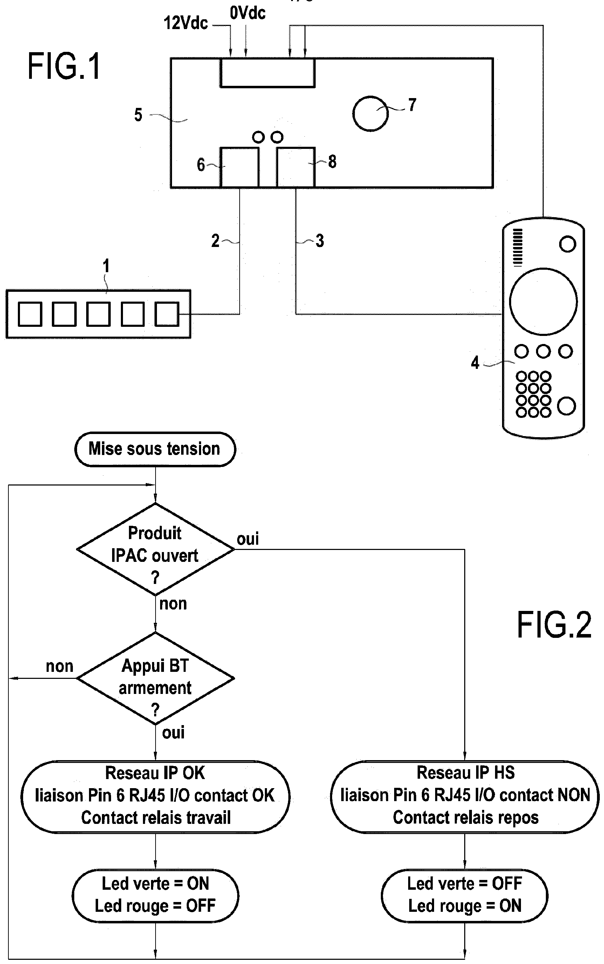

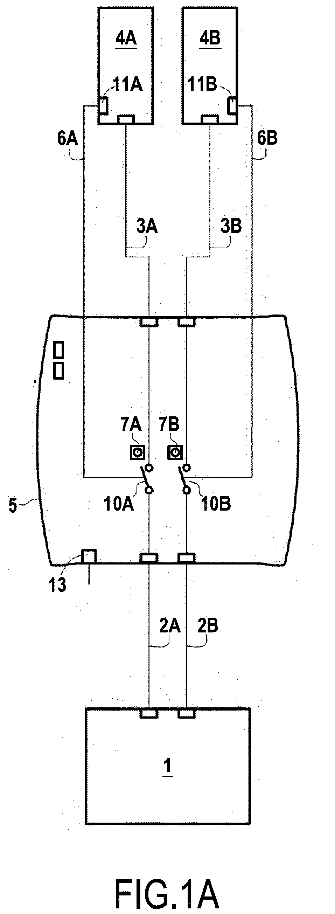

A la figure 1 il est représenté un système suivant l'invention. Un poste central comportant un serveur central de traitement des données (non représenté à la figure 1) est relié à un switch ou commutateur réseau 1, qui, par l'intermédiaire de câbles 2 et 3, est relié à un poste de surveillance du système constitué d'un boîtier pouvant être ouvert ou fermé. Un boîtier 5 de coupure est disposé entre le switch 1 réseau et le boîtier 4 de surveillance en étant relié par le câble 2 RJ45 au switch du réseau et par le câble 3 RJ45 au poste de surveillance, qui est constitué ici d'une platine de porte.

A la mise sous tension, la LED 6 rouge est allumée (réseau NOK) tant que le contact « ouverture » est ouvert. Si le boîtier du produit IP, ici le portier, est fermé, le contact « ouverture du boîtier » est en court-circuit. Le 0Vdc est envoyé sur le négatif de la bobine du relais (PIN 10). Si une personne appuie sur le bouton 7 « Réarmement », le 12V est envoyé sur le positif de la bobine du relais (PIN 1) et le relais commute du mode Repos (3-2/8-9) en mode Travail (3-4/8-7). Le bouton 7 « Réarmement » n'a plus besoin d'être maintenu appuyé car le 12V est envoyé par le contact travail (3-4) vers le positif de la bobine tant que le boîtier 4 du produit IP est fermé. La LED 8 verte s'allume et la LED 6 rouge s'éteint. Le contact travail réalise le court-circuit (8-7) entre les deux broches DATA PIN6 des RJ45 du système, le réseau est OK sur la RJ45 du produit IP.

Dès que le boîtier 4 du produit IP est ouvert, le contact sec « ouverture boîtier » est « ouvert », le 0V n'est plus présent sur la bobine du relais (10), la bobine ne fonctionne plus, le relais repasse en mode repos (3-2/8-9) . La LED 8 verte s'éteint, et la LED 6 rouge s'allume. Le potentiel 12V n'est plus présent sur la bobine (1). Le réseau IP n'est plus disponible sur le câble RJ45 au niveau du produit car la broche « 6 » n'est plus en contact entre la RJ45 entrée et la RJ45 sortie du système « Network Cut ».

Même si la personne qui a ouvert le produit tente de faire un court-circuit localement sur le contact, il est nécessaire de réarmer le système par le bouton 7 « réarmement » pour que le réseau soit OK, le système doit être placé dans une baie sécurisée avec le switch 1 réseau accessible uniquement aux personnes autorisées.

Pour que le réseau soit opérationnel, il faut fermer le boîtier 4 du produit IP, le 0Vdc arrive sur la bobine (10) via le contact « ouverture boîtier », et appuyer sur le bouton 7 « réarmement ». De ce fait, la bobine est auto-alimentée par le contact Travail (3-2), et la liaison DATA PIN 6 entre les deux câbles 2 et 3 RJ45 du système est en court-circuit (8-7), réseau opérationnel.

L'alimentation 12V du système peut disposer d'une batterie, ou sinon être connectée sur un onduleur UPS.

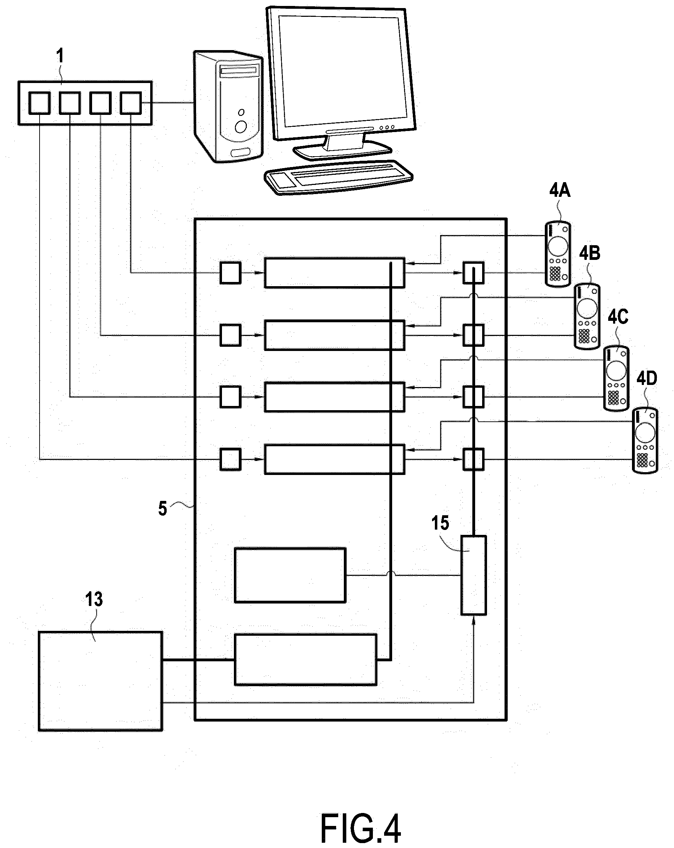

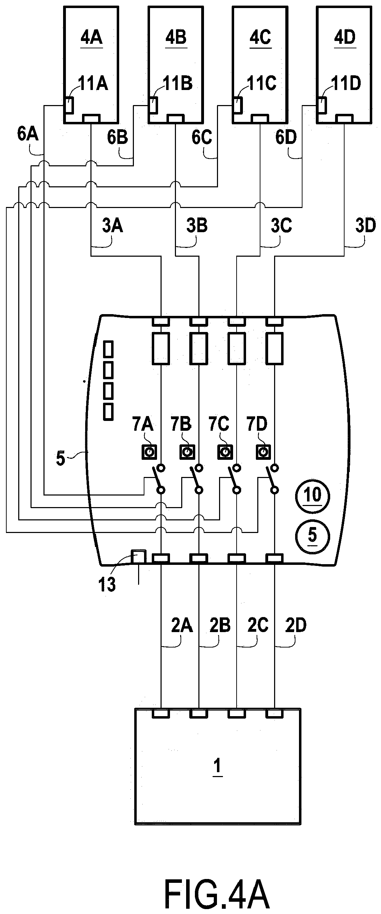

A la figure 4, il est représenté une autre version d'un système suivant l'invention. Cette version permet d'utiliser le système avec 4 ports de type « Network Cut » avec une injection de type PoE+ par un injecteur 15 PoE+ en sortie sur chaque port (30W max IEEE 802.3at).

Le système dispose de 4 blocs gestion relais (§4) avec en plus un module AG6400 (Silvertel) pour l'injection du PoE+.

L'évolution permet aussi d'utiliser un microprocesseur capable de recevoir des commandes réseau pour piloter les 4 contacts de réarmement à distance via des requêtes réseaux de type Telnet, ssh, https.... Il n'est plus nécessaire d'intervenir localement pour réarmer les connexions réseau à la suite de l'ouverture d'un portier IP. Des Informations de types réseau (SNMP, SYSLOG, email...) pourront être envoyées par le réseau à un poste de sécurité pour prévenir de l'ouverture du boitier de surveillance.

Cette version évoluée pourra aussi utiliser un autre moyen d'information d'ouverture du boitier de surveillance. Le boitier de surveillance envoi au boitier de coupure une information réseau (http, Syslog...) prévenant de l'ouverture du boitier. Le réseau se coupe une fois l'information d'ouverture traitée par le boitier de coupure. Le contact SEC entre le boitier de surveillance et le boitier de coupure n'est plus utile.

A la figure 1A, il est représenté un autre mode de réalisation d'un système suivant l'invention. Un poste central est connecté à un commutateur ou switch. Le commutateur, par l'intermédiaire de câbles 2A et 2B RJ45, est connecté à deux ports d'entrée respectifs d'un boîtier 5 de coupure. Ce même boîtier 5 de coupure est connecté à deux postes de surveillance 4A et 4B, par l'intermédiaire de deux câbles 3A et 3B RJ45. Deux câbles 6A et 6B réalisent la liaison entre les postes de surveillance, respectivement 4A et 4B, et la ligne de réseau s'étendant entre les câbles 2A et 3A, respectivement 2B et 3B. Ces câbles 6A et 6B sont en communication avec deux interrupteurs 10A et 10B.

Les deux câbles 6A et 6B sont également en communication avec deux commutateurs 11A et 11B, qui changent d'état entre l'ouverture et la fermeture des boîtiers respectifs des postes 4A et 4B. Une alimentation 13 assure l'alimentation en courant du boîtier de coupure. Deux boutons 7A et 7B de réarmement, respectivement du réseau entre le switch 1 et le poste de surveillance 4A et le switch 1 et le poste de surveillance 4B, sont disposés dans le boîtier de coupure et fonctionnent d'une manière sensiblement identique à celle représentée à la figure 1.

Lorsqu'un ou les deux commutateurs 11A et 11B changent de position passant de l'état fermé à l'état ouvert du boîtier 4A, respectivement 4B, les câbles 6A et 6B transmettent l'information respective aux commutateurs 10A et 10B, qui passent à l'état ouvert et coupent ainsi la commutation respectivement entre le réseau et le poste de surveillance A et le poste de surveillance B. Les boutons de réarmement 7A, respectivement 7B, permettent de remettre les commutateurs 10A et 10B à l'état fermé et d'avoir de nouveau le passage du réseau.

A la figure 4A, il est représenté un autre système suivant l'invention. Le système comporte quatre postes de surveillance 4A, 4B, 4C et 4D et fonctionne d'une manière sensiblement identique à celle représentée à la figure 1A.
En particulier, les mêmes références numériques y sont utilisées pour indiquer les mêmes éléments, avec les indices supplémentaires C et D pour tenir compte de la présence de quatre postes.

## Revendications

1. Système de surveillance comportant au moins un poste central comportant au moins un serveur de commande et de traitement des données reçues du au moins un poste de surveillance, à distance du au moins un poste central, le au moins un poste central et le au moins un poste de surveillance étant reliés par un réseau de communication (1, 2, 3), notamment un réseau dit IP, pour la transmission de données entre le au moins un poste central et le ou les postes de surveillance, au moins un des postes de surveillance, de préférence chaque poste de surveillance, étant constitué d'un boîtier (4) pouvant être ouvert ou fermé, **caractérisé en ce qu'**il est prévu des moyens (5) de coupure de la communication réseau disposés entre le serveur et le boîtier pouvant être ouvert ou fermé.

2. Système suivant la revendication 1, **caractérisé par** des moyens d'information de l'ouverture/fermeture du boîtier, notamment disposés dans le boîtier, qui transmettent aux moyens de coupure des données d'information suivant lesquelles le boîtier est ouvert lorsque ce dernier passe de l'état fermé à ouvert, et l'agencement est tel que les moyens de coupure coupent la communication de données entre le poste correspondant audit boîtier ouvert et le poste central lorsque, notamment dès que, le boîtier passe de fermé à ouvert.

3. Système suivant la revendication 1 ou 2, **caractérisé en ce que** les moyens d'information envoient des données d'information relatives à l'ouverture du boîtier d'un poste de surveillance directement aux moyens de coupure et les moyens de coupure coupent le réseau de communication dès réception des données des moyens d'information.

4. Système suivant l'une des revendications 1 à 3, **caractérisé en ce que** les moyens de coupure sont disposés dans un boîtier de coupure ayant un port d'entrée recevant des communications du serveur, notamment d'un switch multipostes, et un port de sortie relié au boîtier du poste de surveillance, et les moyens de coupure coupent le réseau entre le port d'entrée et le port de sortie.

5. Système suivant l'une des revendications 1 à 4, **caractérisé en ce qu'**il est prévu une pluralité de postes de surveillance, et un switch multipostes est disposé entre la pluralité de postes et le réseau, et les moyens de coupure de chaque poste sont reçus dans un boîtier de coupure commun.

6. Système suivant l'une des revendications 1 à 5, **caractérisé en ce qu'**il est prévu un bouton d'armement/de réarmement du réseau sur le boîtier de coupure.

7. Système suivant l'une des revendications 3 à 6, **caractérisé en ce que** le boîtier de coupure est relié au serveur, de préférence par l'intermédiaire d'un switch, par un câble RJ 45 de données, et au boîtier constituant le poste de surveillance par un autre câble RJ 45, et les moyens de coupure coupent la liaison entre les deux câbles.

8. Système suivant l'une des revendications 1 à 7, **caractérisé en ce que** les moyens d'information comportent un bouton poussoir, un interrupteur, un commutateur ou analogue.

9. Système suivant l'une des revendications 1 à 8, **caractérisé en ce que** les moyens d'information envoient une information dite à contact sec, notamment via un câble deux fils.

10. Système suivant la revendication 1, **caractérisé en ce que** les moyens d'information envoient des donnés d'information relatives à l'ouverture du boîtier d'un poste de surveillance aux moyens de coupure par l'intermédiaire du réseau.
